Europäisches Patentamt

European Patent Office

Office européen des brevets

(11) Publication number: **0 338 849 A2**

# EUROPEAN PATENT APPLICATION

(21) Application number: **89303985.9**

(22) Date of filing: **21.04.89**

(51) Int. Cl.⁴: **G 02 B 1/10**
**G 02 B 5/26**

(30) Priority: **22.04.88 GB 8809504**

(43) Date of publication of application:
**25.10.89 Bulletin 89/43**

(84) Designated Contracting States:
**DE ES FR IT NL SE**

(71) Applicant: **GEC-Marconi Limited**
**The Grove Warren Lane**
**Stanmore Middlesex HA7 4LY (GB)**

(72) Inventor: **Wood, Roger Michael**
**10 The Greenway Rayners Lane**
**Pinner Middlesex HA5 5DR (GB)**

(74) Representative: **Pope, Michael Bertram Wingate**
**Central Patent Department Wembley Office The General**
**Electric Company, p.l.c. Hirst Research Centre East Lane**
**Wembley Middlesex HA9 7PP (GB)**

(54) **Optical devices.**

(57) An abrasion resistant coating for an optical element comprising a nitride material, e.g. aluminium, boron, silicon, germanium, gallium or indium nitride.

The coating may be arranged to be reflective at longer, e.g. infra red, wavelengths.

The coating finds particular application in an aircraft cockpit environment, e.g. on a cockpit canopy, to reflect the infra red component of sunlight and laser light, but may find application with virtually any optical element.

EP 0 338 849 A2

**Description**

**Optical Devices**

The present invention relates to optical devices, and in particular to abrasion resistant coatings for optical devices.

In the present context the term optical device is intended to include any device including a surface into or out of which electromagnetic radiation of a wavelength in or near the visible spectrum or the infra red is intended to pass or from which such radiation is intended to be reflected, and is intended to include windows, visors, sunglasses and the like as well as lens systems and other geometrical refractive and reflective systems.

According to one aspect of the present invention an abrasion resistant coating for an optical device which coating is substantially transparent to electromagnetic radiation over a range of wavelengths in or near the visible spectrum and/or the infra red comprises a coating of a nitride material.

The nitride material may, for example, be aluminium, boron, silicon, germanium, gallium or indium nitride, herein referred to as insulating nitrides.

According to another aspect of the present invention in an abrasion resistant coating for an optical device, which coating is substantially transparent to electromagnetic radiation over a range of wavelengths including at least part of the visible spectrum, and substantially reflecting at longer wavelengths, at least the surface layer of said coating is of a nitride material which exhibits a transition wavelength between said range of wavelengths and said longer wavelengths.

According to another aspect of the invention an optical device comprises an optical element of a material which is substantially transparent to electromagnetic radiation over a first range of wavelengths and an abrasion resistant coating on at least one major surface of said element, which coating is substantially transparent to electromagnetic radiation over a second range of wavelengths at least partially coextensive with said first range and substantially reflecting over a third range of wavelengths longer than the wavelengths of said second range, at least the surface layer of said coating being of a nitride material exhibiting a transition wavelength between said second and third ranges of wavelengths.

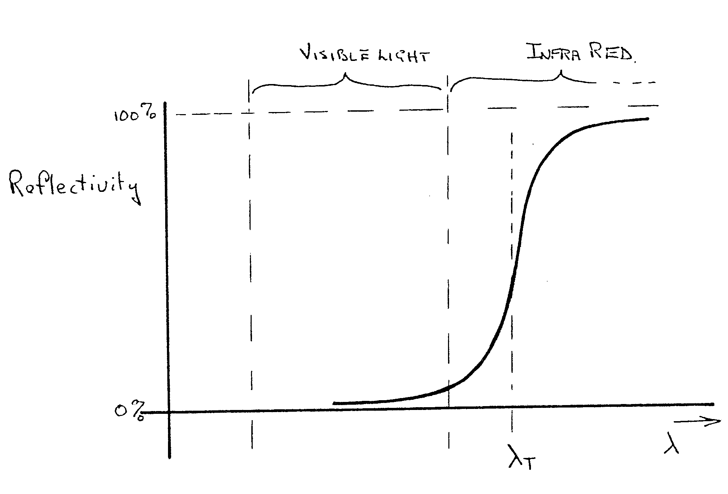

Optical devices and abrasion resistant coatings for optical devices will now be described by way of example with reference to the accompanying drawing, which illustrates graphically the variation in reflectivity of an optical coating material with varying wavelength of incident energy.

In many situations in which incident electromagnetic energy in the visible wavelength band or in adjacent wavelength bands is of significance, in that it may fall upon an observer, a sensor, or upon equipment which may absorb such incident energy, there may be wavelength regions within those bands at which an optical device may be required to be transparent to incident energy and wavelength regions at which that device is required to reflect incident energy. For example, in the case of an aircraft cockpit the infra red component of sunlight incident on the canopy can impose considerable loads on the cockpit and equipment cooling systems, and it would be desirable to reflect this infra red component at the canopy surface. Equally, in the case of an infra red sensor there may well be incident energy at other wavelengths which may overload the sensor and which it would be desirable to reflect.

An aircraft canopy itself may also be under threat from infra red lasers, particularly the 10.6um carbon dioxide laser, since canopy materials such as glass or perspex absorb strongly at such wavelengths. The canopy and the interior may together be protected by a visually transparent, infra red reflecting coating on the outer surface of the canopy, but any coating used for this purpose must be thermally and chemically stable, mechanically durable and abrasion resistant.

Visually transparent coatings incorporating indium tin oxide can give high reflectance at infra red wavelengths while only slightly impairing visual transmittance, but such coatings are not robust and cannot be used alone on exposed surfaces. Thin metallic layers can be used, but there is a direct trade-off between reflectance and visual transmission loss. Reflecting dielectric stacks can be used to reflect incident energy of specific wavelengths, but in the case of incident laser energy the materials from which the dielectric stack is made must in themselves be resistant to laser induced damage.

In accordance with the present invention the physical, chemical and thermal characteristics are met by compounds referred to herein as insulating nitrides, such as nitrides of aluminium, boron, gallium or indium. These materials exhibit transition wavelengths in the wavelength bands of interest, such that for example at visible wavelengths a coating of one or more of these nitrides may be substantially transparent while at infra red, above the transition wavelength, the coating may be substantially reflecting. Such a variation in reflectivity is illustrated in the drawing.

By varying the composition of the nitride layers deposited refractive indices in the visible spectrum of widely differing values may be obtained, and if required the refractive index may be varied continuously through a layer by depositing a continuously varying mixture of nitrides selected from, say, boron nitride, silicon nitride and germanium nitride, of refractive indices 1.5, 2 and 3.7 respectively. The properties of any one basic nitride material may be varied by the introduction of dopants from insulating to semiconducting, or even to conducting if required.

These nitrides, particularly boron nitride, are hard and abrasion resistant, are chemically inert and capable of withstanding high temperatures, and have high laser induced damage thresholds.

Nitride layers of the necessary optical quality may be deposited either by DC magnetron sputtering or by microwave plasma assisted chemical vapour deposition. Magnetron sputtering is a cheaper process than plasma deposition but affords less control over the composition of the nitride layers. Magnetron sputtering is therefore best suited to providing hard coatings of constant refractive index.

Plasma deposition utilises microwave heating of a mixture of nitrogen and the necessary precursor chemical vapours, such as boron tribromide or silicon tetrachloride, to form a plasma, from which the nitride coating is deposited uniformly on all surfaces exposed to the plasma. Plasma deposition enables gradual variation of the refractive index of the deposited coating by adjustment of the proportions of the chemical vapours.

By virtue of the variation of refractive index obtainable nitride coatings or layers may be used to make up anti-reflective coatings for example for head-up display combiners, cathode ray tubes, lenses and other visible wavelength and infra red optical elements. The hardness of the coatings alone may be utilised for visors, spectacle lenses and sunglasses, and any infra red reflective properties of such coatings would afford valuable protection for the users.

Nitride layers of suitable properties may be utilised to protect the more vulnerable materials, such as zinc sulphide or germanium, which are used in infra red systems. Their purely infra red reflective properties may be utilised in broad-band mirrors for use in infra red systems, while nitride coatings with suitable transition wavelengths may be utilised to protect infra red detectors from overloading by high energy sources such as longer infra red wave length lasers.

Nitride coatings may be deposited on an intermediate surface such as a suitably stable polymer film, the film being subsequently applied to the optical surface to be protected. Such polymers as polyether imide and poly ether sulphone have suitably high temperature and chemical stability.

The transition wavelength referred to above has been equated to the wavelength at which the complex refractive index of the material falls to zero, and the complex refractive index in turn may be expressed as a function of the density of unbound charge carriers in the material.

## Claims

1. An abrasion resistant coating for an optical device which coating is substantially transparent to electromagnetic radiation over a range of wavelengths in or near the visible spectrum and/or the infra red comprising a coating of a nitride material.

2. An abrasion resistant coating in accordance with Claim 1 wherein the nitride material comprises the nitride of one or more of aluminium, boron, silicon, germanium, gallium or indium.

3. An abrasion resistant coating for an optical device, which coating is substantially transparent to electromagnetic radiation over a range of wavelengths including at least part of the visible spectrum, and substantially reflecting at longer wavelengths, wherein at least the surface layer of said coating is of a nitride material which exhibits a transition wavelength between said range of wavelengths and said longer wavelengths.

4. An optical device comprising an optical element of a material which is substantially transparent to electromagnetic radiation over a first range of wavelengths and an abrasion resistant coating on at least one major surface of said element, which coating is substantially transparent to electromagnetic radiation over a second range of wavelengths at least partially coextensive with said first range and substantially reflecting over a third range of wavelengths longer than the wavelengths of said second range, at least the surface layer of said coating being of a nitride material exhibiting a transition wavelength between said second and third ranges of wavelengths.

Reflectivity

100%

0%

Visible Light

Infra Red

$\lambda_T$

$\lambda$